Europäisches Patentamt

European Patent Office

Office européen des brevets

(11) Numéro de publication: **0 292 342 B1**

# FASCICULE DE BREVET EUROPEEN

(45) Date de publication de fascicule du brevet: **22.07.92**

(51) Int. Cl.5: **H04M 17/02**, H04K 1/00, H04L 9/00

(21) Numéro de dépôt: **88400896.2**

(22) Date de dépôt: **14.04.88**

(54) **Système d'authentification analogique réciproque entre un terminal et une ligne de transmission.**

(30) Priorité: **17.04.87 FR 8705503**

(43) Date de publication de la demande:
**23.11.88 Bulletin 88/47**

(45) Mention de la délivrance du brevet:
**22.07.92 Bulletin 92/30**

(84) Etats contractants désignés:
**BE CH DE ES GB IT LI NL SE**

(56) Documents cités:
**EP-A- 0 163 358**
**FR-A- 2 561 841**
**US-A- 4 467 140**

**NTZ, vol 38, no. 7, 1985, pages 468-471, Berlin, DE; H.-P. BAUER: "Schnurloses Telefon für den 900-MHz-Bereich"**

**IEE PROCEEDINGS, vol. 131, partie F, no. 7, décembre 1984, pages 684-694, Stevenage, GB; F. AYOUB et al.: "Cryptographic techniques and network security"**

**IBM TECHNICAL DISCLOSURE BULLETIN, vol. 26, no. 1, juin 1983, pages 199-201, New York, US; W.D. HOPKINS: "Transaction incrementing message authentication key"**

(73) Titulaire: **SCHLUMBERGER INDUSTRIES**
**50, avenue Jean Jaurès**
**F-92120 Montrouge(FR)**

(72) Inventeur: **Barraud, Claude**
**7,Rue de Solférino**
**F-75007 Paris(FR)**

(74) Mandataire: **Hasenrader, Hubert et al**
**Cabinet BEAU DE LOMENIE 55, rue d'Amsterdam**
**F-75008 Paris(FR)**

## Description

La présente invention a pour objet un système d'authentification analogique réciproque entre un terminal et une ligne de transmission.

De façon plus précise mais non exclusive l'invention concerne un tel système appliqué au cas d'un poste téléphonique et d'intérieur à pré-paiement c'est à dire au cas d'un poste téléphonique installé dans un lieu privé et dans lequel l'acquittement de la taxe téléphonique se fait à l'aide de pièces ou de cartes à mémoire. L'invention est particulièrement intéressante dans le cas où la taxation téléphonique ne se fait pas par comptage d'impulsions de taxation émises au niveau du central téléphonique mais par pré-paiement immédiat par l'usager. En effet on comprend que dans ce cas il faut éviter que le poste téléphonique à pré-paiement ne puisse être remplacer par un poste normal auquel cas les communications téléphoniques pourraient être obtenues gratuitement par un fraudeur.

Plus généralement l'invention s'applique à tous les cas où il y a lieu d'établir une authentification réciproque entre un terminal téléphonique ou autre et une ligne de transmission matérielle ou non avant d'autoriser l'établissement d'échanges d'informations.

Pour résoudre ce problème on a proposé la solution suivante: Lors de la phase initiale d'établissement de la communication téléphonique on échange entre l'émetteur et le récepteur des grandeurs codées permettant de contrôler l'accès à la communication.

Un tel système ne résoud que partiellement le problème. On a proposé également un codage de l'information à transmettre au niveau de l'émetteur et un décodage symétrique au niveau du récepteur. Cependant la transmission de l'information se faisant sous forme de signaux de fréquence analogiques les opérations de codage et de décodage sont relativement complexes.

En outre, le document US-A-4 467 140 décrit un système de téléphone sans fil dans lequel on peut entrer un code de sécurité pour n'autoriser l'accès qu'à certains utilisateurs.

Pour remédier à cet inconvénient, un objet de l'invention est de fournir un tel système d'authentification réciproque qui permette de contrôler l'autorisation de communication durant toute la durée de celle-ci et qui soit de plus compatible avec la transmission d'informations sous forme de signaux analogiques de fréquence et enfin qui permette de déjouer toutes les tentatives de fraude y compris par un enregistrement des signaux échangés lors de l'établissement de communications précédentes.

Pour atteindre ce but, selon l'invention, le système pour authentifier une communication par signaux analogiques de fréquence appartenant à une première plage de fréquences donnée entre un terminal émetteur récepteur et une ligne de transmission se caractérise en ce qu'il comprend en outre un dispositif de contrôle monté sur la ligne de transmission et en ce que :

ledit terminal comprend des moyens pour élaborer des signaux de fréquence d'authentification en plus desdits signaux de communication avec une périodicité T durant la communication, lesdits signaux d'authentification ayant des fréquences appartenant à une deuxième plage de fréquence, lesdits signaux d'authentification comprenant pour chaque période un premier signal $f_1^i$ fixe caractéristique dudit poste et un deuxième signal $f_2^i$ variable ;

Ledit terminal et ledit dispositif de contrôle comprennent des moyens pour échanger sous forme de fréquences une première valeur initiale commune $K_1$ avant l'établissement d'une communication, des moyens pour mettre en oeuvre un algorithme commun pour élaborer pour chaque période une valeur de deuxième fréquence respectivement $f_2^i$ et $f'^i_2$ à chaque période T dépendant au moins de la valeur de deuxième fréquence précédente respectivement

$$f_2^{i-1} \text{ et } f'^{i-1}_2.$$

Le dit terminal comprend en outre des moyens pour émettre à chaque période lesdits fréquences $f_1^i$ et $f_2^i$ ; et ledit dispositif de contrôle comprend en outre des moyens pour comparer chaque première fréquence $f_1^i$ à des valeurs de première fréquence prédéterminées, et pour comparer chaque deuxième fréquence $f_2^i$ reçue à la fréquence calculée correspondante $f'^i_2$ avec une plage d'approximation prédéterminée correspondant à ladite transmission des signaux de fréquence, et des moyens pour inhiber ladite communication en fonction des résultats desdites comparaisons.

On comprend qu'ainsi un tel système répond effectivement aux conditions posées. Du fait que la transmission des signaux d'authentification se répéte périodiquement l'authentification est effectivement réalisée pendant toute la durée de la transmission d'informations. Le premier signal de fréquence d'authentification sert à identifier le terminal émetteur récepteur. L'échange initial entre le dispositif de contrôle et le terminal de la première valeur initiale commune $K_1$ avant l'établissement d'une communication permet de réaliser effectivement une authentification réciproque.

D'autres caractéristiques et avantages de l'invention apparaitront plus clairement à la lecture de la description qui suit d'un mode de réalisation de l'invention donné à titre d'exemple non limitatif.La description se réfère au dessin annexé sur lequel :

La figure 1 est une vue simplifiée d'un système d'authentification pour un poste téléphonique conforme à l'invention;

La figure 2 montre le circuit d'authentification associé au poste téléphonique ;

La figure 3 montre en détail les circuits du dispositif de contrôle monté sur la ligne téléphonique ; et

La figure 4 montre une partie de l'organigramme mis en oeuvre pour comparer les deuxièmes fréquences.

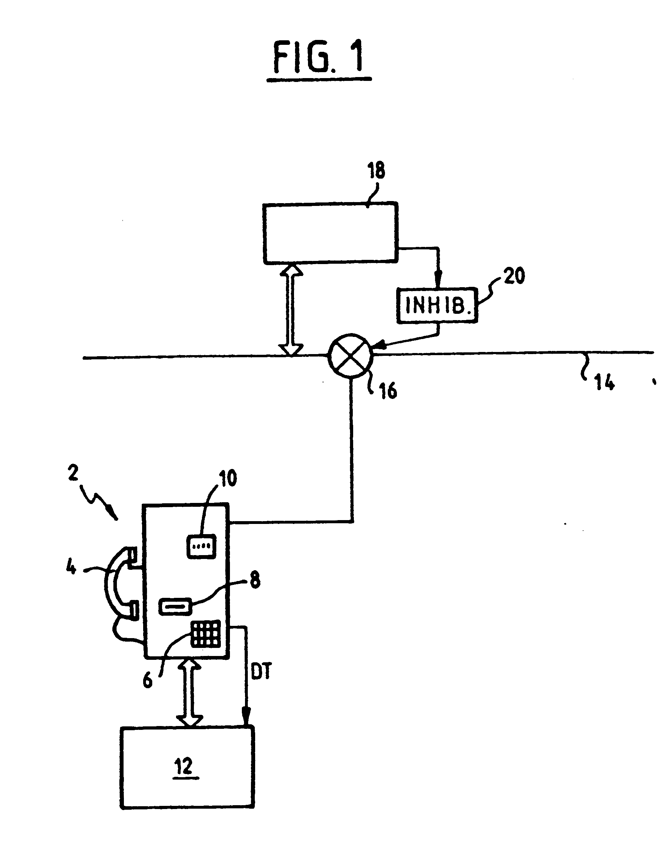

En se référant tout d'abord à la figure 1 on va décrire le principe de l'invention. Le terminal, le poste téléphonique 2 dans le cas de la présente description, comprend un combiné 4 un clavier d'entrée de numéros téléphoniques 6, un lecteur de cartes à mémoire 8 et un dispositif d'affichage 10 de façon classique pour les postes téléphoniques à pré paiement.

Sur la figure 1 on a également fait apparaître un circuit 12 relié au reste des circuits du poste téléphonique 2 et qui regroupe l'ensemble des circuits propres à la fonction d'authentification au niveau du poste téléphonique 2. Sur la figure 1 on a également représenté une ligne téléphonique 14 sur laquelle est connectée par le branchement 16 le poste 2. La figure 1 montre encore un dispositif de contrôle 18 qui est relié à la ligne 14 et qui peut commander un dispositif d'inhibition 20 capable d'interrompre la transmission de l'information sur la ligne ou de la rendre inaudible.

Ce dispositif de contrôle 18 échange, pendant toute la durée d'une communication téléphonique, avec le poste 2 des informations sous forme de signaux à très bas niveau (-50dB par exemple) ayant des fréquences non audibles pour l'oreille humaine.

Le poste téléphonique 2 émet avec une périodicité fixe T ,par exemple toutes les deux secondes, un couple de fréquences
$f_1^i$ et $f_2^i$ .

Les fréquences $f_1^i$ sont toutes égales et servent à identifier le poste téléphonique 2. Les fréquences $f_2^i$ changent à chaque fois qu'un nouveau couple de fréquences est émis par le poste téléphonique.

Le problème à résoudre vient en partie du fait que la plage de fréquence utilisable est limitée, par exemple de 25kHz à 35kHz, et qu'il y a une incertitude sur la fréquence effectivement élaborée par le téléphone, et sur la fréquence effectivement décodée par le dispositif de contrôle 18.Cette incertitude peut être chiffrée à ± 5 Hz. Cela signifie que dans la plage de fréquence définie ci-dessus, on ne peut utiliser effectivement que 1000 fréquences différentes, c'est à dire 1000 informations différentes.

Pour obtenir cependant une authentification efficace on utilise de préférence le procédé suivant :
la fréquence $f_2^n$ est définie de la manière suivante :

$$f_2^{n+1} = ALG1 \ (K_n, \ f_2^n) \ mod \ (10^4) + 25 \ kHz \ donc$$

$\forall \ n \in N^* \ f_2^n \in [25kHz, \ 35 \ kHz]$

les incertitudes sur $f_2^n$ ne sont pas cumulées puisque ALG1 est stochastique en fréquence.

Les valeurs initiales $K_n$ sont définies de la manière suivante :

$K'_{n+1} = ALG2 \ (K'_n, f_2^1 )$

ALG2 est tel que : $K'_{n+1} > K'_n$ et $K_n = K'_n mod \ (D)$

On définit de plus :

X clé publique, nombre premier (64 bits)

D clé publique, nombre premier (96 bits)

E1 nombre aléatoire (64 bits) tiré par le téléphone

E2 nombre aléatoire (64 bits) tiré par le circuit de contrôle.

Le circuit 12 du poste téléphonique 2 calcule (code RSA) :

$Y = X^{**} E1 \ mod \ (D)$

le circuit de contrôle 18 calcule

$$Z = X^{**}E2 \bmod (D)$$

La mise en oeuvre du code R S A à clé publique est bien connue. Pour avoir plus de détails on pourra se reporter au brevet américain 4.405.829.

Le téléphone 2 et le circuit de contrôle 18 échangent Y et Z, ce qui permet à chacun d'eux de calculer une première valeur initiale commune

$$K_1 = Z^{**}E1 \bmod (D) \text{ et } K_1 = Y^{**}E2 \bmod (D).$$

Le fonctionnement pratique simplifié du système est le suivant :

Préalablement à l'établissement de la communication téléphonique, les nombres Y et Z sont élaborés et échangés sous forme de fréquences.

De préférence Y et Z sont transmis de la manière suivante :

Y et Z comportent 96 bits, soit 32 chiffres allant de 0 à 7 ou encore 8 nombres de 4 chiffres allant de 0 à 7.

On peut poser formellement $Y = n_1, n_2 ... n_8$

$n_i$ i [1,8] étant des nombres à 4 chiffres compris entre 0 et 7.

On peut alors poser :

$Y_i = (n_i + 25.000)$ Hz. La transmission de Y consistera alors dans la transmission des huit fréquences $Y_1$ à $Y_8$.

Ainsi le poste téléphonique 2 et le circuit de contrôle 18 peuvent élaborer la première valeur initiale $K_1$. Par ailleurs ils ont en mémoire les algorithmes ALG1 et ALG2.

A l'établissement de la communication téléphonique, le poste téléphonique émet la fréquence caractéristique $f_1^1$ et tire la fréquence $f_2^1$. Le dispositif de contrôle 18 vérifie que la fréquence $f_2^1$ est correcte et mémorise la fréquence $f_2^1$.

A partir de $f_1^1$ et de $K_1$, le téléphone 2 et le dispositif de contrôle 18 élaborent respectivement la fréquence $f_2^2$ et la fréquence $f_2^1$. La fréquence $f_2^2$ est transmise, 2 secondes après $f_2^1$, au dispositif de contrôle 18. Celui-ci vérifie que la valeur $f_2^2$ transmise est bien égale à la valeur $f_2^2$ qu'il a calculée. Si c'est bien le cas, la communication téléphonique se poursuit avec émission des deuxièmes fréquences $f_2^3 ... f_2^n$. Si ce n'est pas le cas, le circuit inhibiteur 20 émet un bruit blanc sur la ligne 14, ce qui rend totalement inutilisable le poste téléphonique 2. En fait, comme on l'expliquera plus en détails ultérieurement, la comparaison est effectuée avec une plage d'approximation qui correspond à la précision que l'on peut attendre du circuit d'élaboration des fréquences,

de la ligne de transmission, et du décodage de la fréquence à la réception. Cette approximation est typiquement de ± 5Hz.

A la lecture de la description précédente on comprend que le système selon l'invention permet effectivement d'éviter tous les types de fraude.Comme la première valeur initiale $K_1$ est différente pour chaque communication et que cette valeur intervient pour la définition des valeurs successives de deuxièmes fréquences, il n'est pas possible de tenter de frauder en enregistrant les valeurs de deuxième fréquence lors d'une communication normale et en réutilisant les valeurs enregistrées pour établir une communication frauduleuse. De même, comme chaque valeur de deuxième fréquence dépend de la valeur initiale $K_n$ correspondante, la probabilité pour que l'algorithme ALG1 élabore des valeurs de deuxièmes fréquences identiques est quasiment nulle, ce qui permet d'empecher un autre type de fraude.

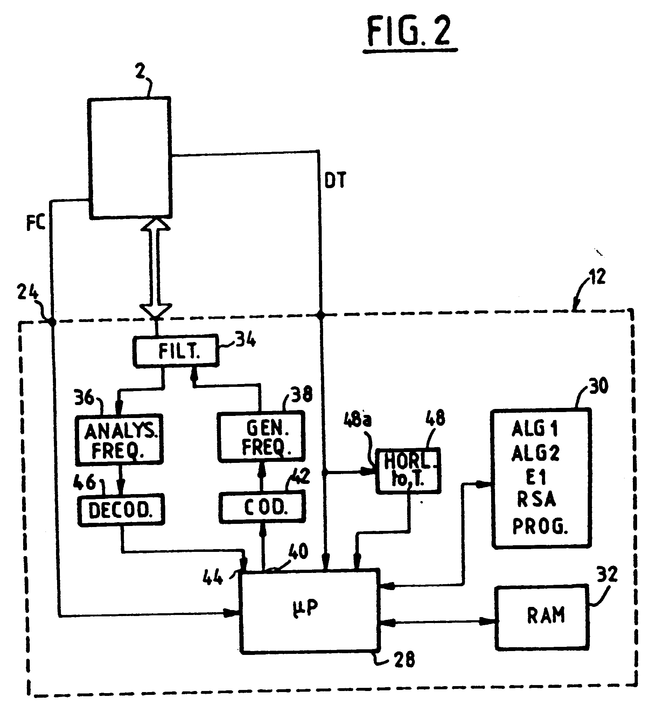

En se référant maintenant à la figure 2 on va décrire plus en détail le circuit 12 du poste téléphonique 2 servant à mettre en oeuvre la procédure d'authentification. Le circuit 12 reçoit sur son entrée 22 le signal DT correspondant à l'instant de début de taxation. Le circuit 12 reçoit également sur son entrée 24 le signal FC de fin de communication. Il reçoit enfin sur son entrée 26 les signaux de fréquence reçus par les circuits téléphonique du poste 2. Le circuit 12 comprend essentiellement un microprocesseur 28 associé à une mémoire de programme et de données fixes 30 et à une mémoire volatile inscriptible 32. Par exemple la mémoire 30 est une PROM et la mémoire 32 est une RAM. Le circuit 12 comporte également des circuits d'interface et de synchronisation. Plus précisément il comprend un filtre 34 relié à l'entrée 26. Ce filtre 34 a pour fonction de ne laisser passer que les signaux de fréquence dans la plage de fréquence utilisée pour les signaux d'authentification c'est à dire typiquement dans la plage 25 à 35 kHz. Le filtre 34 est relié d'une part à un analyseur de fréquence 36 et d'autre part à un générateur de fréquence 38. La sortie 40 du microprocesseur 28 est reliée à l'entrée de commande du générateur de fréquence 38 par l'intermédiaire d'un circuit de codage 42.

4

Symétriquement l'entrée 44 du microprocesseur 28 est reliée à la sortie de l'analyseur de fréquence 36 par un circuit de décodage 46. Enfin le circuit 12 comporte un circuit de synchronisation 48 qui reçoit sur son entrée de commande 48a le signal de début de taxation appliqué à l'entrée 22 du circuit 12. Le circuit de synchronisation 48 a pour fonction d'émettre une impulsion d'initialisation à la réception du signal DT et puis d'émettre des signaux d'horloge de période T après une durée initiale $t_0$ à compter de la réception du signal DT.

La mémoire 30 comporte essentiellement les instructions et éléments de programme permettant la mise en oeuvre des algorithmes ALG1 et ALG2, la mise en oeuvre du programme de codage à clé publique RSA, les éléments d'élaboration de la valeur initiale $K_1$ ainsi que des instructions permettant le déroulement de l'ensemble du programme qui sera décrit ci-après. La mémoire 32 permet d'effectuer et de mémoriser les résultats intermédiaires correspondant à la mise en oeuvre des différents algorithmes ainsi qu'à mémoriser les différentes valeurs des fréquences $f_2^j$ et les différentes valeurs du coefficient $K_i$.

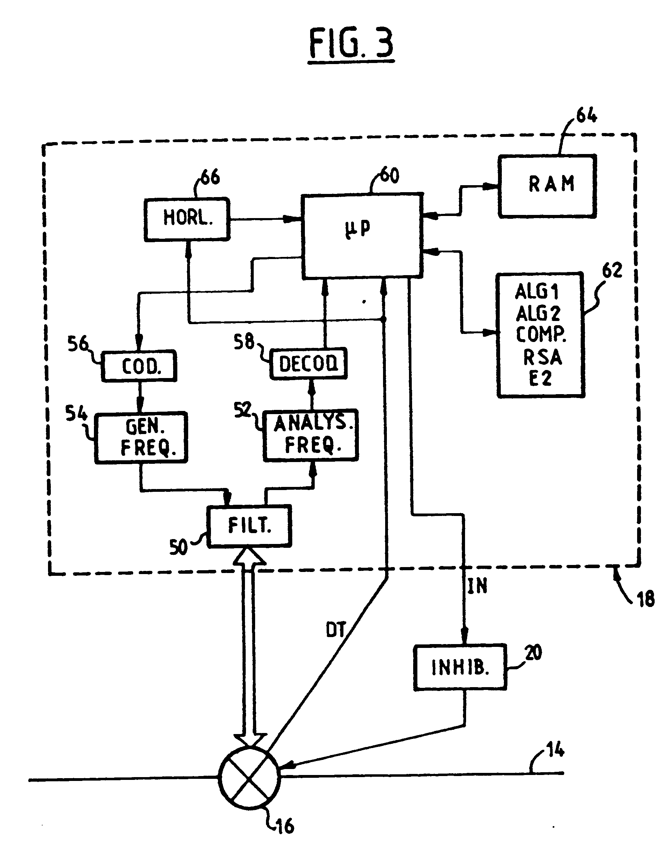

La figure 3 montre les circuits du dispositif de contrôle 18. Il comprend un filtre d'entrée 50 qui ne laisse passer que les signaux d'authentification c'est-à-dire les signaux dont la fréquence est comprise entre 25 et 35kHz. Au filtre 50 sont associés un analyseur de fréquence 52 et un générateur de fréquence 54. Le générateur 54 est commandé par un circuit de codage 56 alors que la sortie de l'analyseur de fréquence 52 est reliée à un circuit de décodage 58. Le dispositif de contrôle 18 comprend également un microprocesseur 60 associé à une mémoire de programme et de données fixes 62 et à une mémoire inscriptible volatile 64. La mémoire 62 contient les sous programmes nécessaires pour la mise en oeuvre des algorithmes ALG1 et ALG2, le programme RSA à clé publique, un programme de comparaison COMP et les données $E_2$, D et X associées au programme RSA. Le dispositif 18 comprend enfin un circuit de synchronisation 66 qui a la même fonction que le circuit de synchronisation 48 du circuit 12, et qui est déclenché par l'application sur son entrée du signal de début de taxation DT.

Le fonctionnement détaillée du système d'authentification est le suivant. Lorsque le signal DT est appliqué sur son entrée 22, le circuit de synchronisation 48 du circuit 12 émet une impulsion d'initialisation qui déclenche un intervalle de temps initial $t_0$. Pendant cet intervalle de temps le micro processeur 28 élabore la valeur Y et la transmet au dispositif de contrôle 18 et à partir de la valeur Z qu'il reçoit du dispositif de contrôle 18 il élabore la grandeur initiale $K_1$. Pour cela, sous le contrôle du programme RSA stocké dans la mémoire 30, et à partir des clés publiques X et D et de la valeur $E_1$ qui sont également stockées dans la mémoire 30, le microprocesseur 28 calcule le nombre Y. Le circuit de codage 42, élabore les huit nombres à quatre chiffres $n_i$ correspondants. A partir de ces huit nombres $n_i$ le générateur de fréquence 38 élabore les huit fréquences correspondance $Y_i$ qui sont envoyées sur la ligne 14 pour être reçues par le dispositif de contrôle 18.

Symétriquement, à la réception du signal de début de taxation DT, le dispositif de contrôle 18 élabore les huit fréquences $Z_i$ correspondant à la valeur Z du code RSA et les envoie sur la ligne 14 pour qu'elles soient reçues par le circuit 12 du poste téléphonique 2.

A la réception des fréquences $Z_i$, l'analyseur de fréquence 36 et le circuit de décodage 46 élabore les nombres correspondants $n_i$ et donc finalement le nombre Z qui est stocké temporairement dans la mémoire 32. A partir de la valeur Z, et sous le contrôle du programme RSA, le micro processeur 28 calcule la première valeur initiale $K_1$ qui est à son tour mémorisée dans la mémoire 32. De même à la réception des fréquences $Y_i$, le dispositif de contrôle 18 détermine par un processus analogue la valeur de Y et calcule la valeur initiale $K_1$ qui est stockée dans la mémoire 64.

A l'expiration de l'intervalle de temps $t_0$ les circuits de synchronisation 48 et 66 émettent une nouvelle impulsion. A la réception de cette impulsion le circuit 12 émet la première fréquence $f_1^1$ et la deuxième fréquence $f_2^1$. Le dispositif de contrôle 18, à la réception de ces deux fréquences, les stocke dans sa mémoire 64.

Après qu'un temps T se soit écoulé, les circuits de synchronisation 48 et 66 émettent une nouvelle impulsion d'horloge. A la réception de cette impulsion, le microprocesseur 28 du circuit 12, calcule la deuxième valeur $K_2$ de $K_i$ par mise en oeuvre de l'algorithme ALG2 et la deuxième valeur de deuxième fréquence $f_2^2$ par mise en oeuvre de l'algorithme ALG1. Simultanément le microprocesseur 66 du circuit 18 calcule la deuxième valeur $K_2$ de $K_i$ et la deuxième valeur de deuxième fréquence $f_2^2$ par mise en oeuvre des algorithmes ALG1, ALG2 et à partir de la valeur $f_2^1$ déjà mémorisée. Lorsque le dispositif de contrôle 18 reçoit la deuxième valeur de deuxième fréquence $f_2^2$, le microprocesseur 60, sous le contrôle du programme COMP, compare cette valeur $f_2^2$ à la valeur calculée correspondante $f'_2^2$ à une approximation prédéterminée près. Si ces deux valeurs approximées sont identiques la communication se poursuit. A la période T suivante le circuit 12 calcule la valeur de deuxième fréquence $f_2^3$ et le circuit 18 calcule la valeur de deuxième fréquence $f'_2^3$ et la compare à la valeur reçue $f_2^3$. Ce cycle se poursuit jusqu'à ce que le circuit 12 reçoit le signal de fin de communication FC ou jusqu'à ce que $f'_2^j$ soit différente de $f_2^j$. Dans ce cas le microprocesseur 60 émet un signal d'inhibition 20. Celui-ci comporte par exemple un générateur de bruit blanc qui rend la ligne 14 inutilisable.

Si l'on veut décrire plus en détail le fonctionnement du système en tenant compte de l'approximation, il est le suivant :

A partir de la fréquence

$$f_2^{n-1}$$

le microprocesseur 28 calcule la valeur $f_2^n$ en deux temps. Tout d'abord il calcule par mise en oeuvre de l'algorithme ALG1 un nombre $p_2^n$ . Ce nombre qui est compris entre 25000 et 35000 est remplacé par une valeur approximée de $p_2^n$ , cette valeur approximée étant $f_2^n$ . L'approximation est la suivante :

Soit x le chiffre des unités de la valeur $p_2^n$ ;

si $o < x < 5$ on passe de $p_2^n$ à $f_2^n$ en remplaçant x par o et en conservant le chiffre des dizaines et si $5 < x < 9$ on passe de $p_2^n$ à $f_2^n$ en remplaçant x par o et en remplaçant le chiffre des dizaines par le chiffre immédiatement supérieur. En d'autres termes $f_2^n$ est égale à $p_2^n$ arrondie à la dizaine inférieure si $x < 5$, et arrondie à la dizaine supérieure si $x > 5$.

La fréquence approximée $f_2^n$ est transmise sur la ligne 14 par le générateur de fréquence 38. Lors de la transmission sur la ligne la fréquence peut être légèrement modifiée. L'analyseur de fréquence 52 délivre une valeur $q_2^n$ . Le microprocesseur 60 calcule la valeur approximée de $q_2^n$ par la technique d'approximation déjà décrite, cette valeur approximée étant $g_2^n$ . On comprend que $g_2^n = f_2^n$ . Le microprocesseur 60 calcule $f'^n_2$ également en deux temps. Tout d'abord par mise en oeuvre de l'algorithme ALG1 le microprocesseur calcule $v_2^n$ à partir de

$$f'^{n-1}_2$$

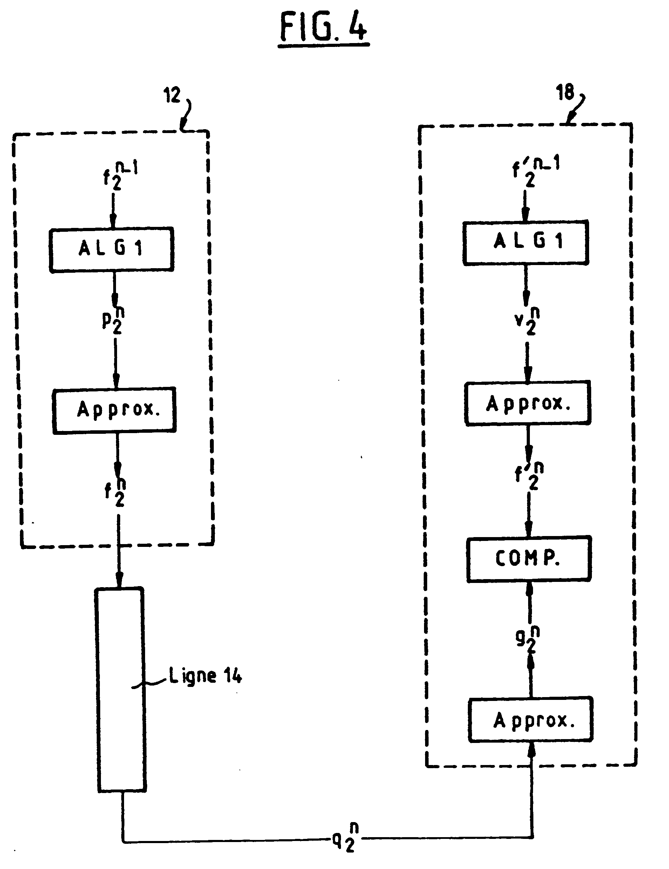

Puis le microprocesseur calcule la valeur approximée de $v_2^n$ , qui est $f'^n_2$ , par la technique déjà décrite. Ce sont les valeurs approximées $f'^n_2$ et $g_2^n$ , c'est à dire $f_2^n$ , qui sont comparées par le programme de comparaison COMP. La figure 4 illustre l'organigramme d'élaboration des valeurs $f_2^n$ et

$$f'^n_2$$

et de comparaison de celles-ci. Sur cette figure l'expression "Approx" désigne la mise en oeuvre de l'approximation décrite précédemment.

Il va de soit que les approximations, au lieu d'être mises en oeuvre par des éléments de programme des microprocesseurs 28 et 60, pourraient l'être par des circuits numériques spécifiques comprenant des compteurs et des comparateurs.

Les circuits qui viennent d'être décrits sont spécifiques à l'authentification de la communication, mais il va de soi que le poste téléphonique 2 comporte tous les circuits classiques d'un poste téléphonique à pré-paiement et à taxation locale. Ces circuits sont en eux-mêmes bien connus.

## Revendications

1. Système pour authentifier une communication par signaux analogiques de fréquence appartenant à une première plage de fréquences données entre un terminal émetteur/récepteur et une ligne de communication, caractérisé en ce qu'il comprend en outre un dispositif de contrôle monté sur ladite ligne et en ce que:

ledit terminal comprend des moyens pour élaborer des signaux de fréquence d'authentification en plus desdits signaux de communication avec une périodicité T durant l'établissement d'une communication, lesdits signaux d'authentification ayant des fréquences appartenant à une deuxième plage de fréquence, lesdits signaux d'authentification comprenant pour chaque période un premier signal $f_1^i$ fixe caractéristique dudit poste et un deuxième signal $f_2^i$ variable;

ledit terminal et ledit dispositif de contrôle comprennent des moyens pour échanger sous forme de fréquences une première valeur commune $K_1$ avant l'établissement d'une communication, des moyens pour mettre en oeuvre un algorithme commun pour élaborer une valeur de deuxième fréquence respectivement $f_2^i$ et $f_2'^i$ à chaque période T dépendant au moins de la valeur de deuxième fréquence précédente respectivement

$$f_2^{i-1}$$

et

$$f_2'^{i-1};$$

ledit terminal comprend en outre des moyens pour émettre à chaque période lesdits fréquences $f_1^i$ et $f_2^i$ ;et

lesdits moyens de contrôle comprennent en outre des moyens pour comparer chaque première fréquence $f_1^i$ à des valeurs de première fréquence prédéterminées, et pour comparer chaque deuxième fréquence $f_2^i$ reçue à la deuxième fréquence correspondante élaborée $f_2'^i$ , avec une plage d'approximation prédéterminée correspondant à la transmission de la ligne et des moyens pour inhiber ladite communication en fonction des résultats desdites comparaisons.

2. Système selon la revendication 1, caractérisé en ce que les moyens pour mettre en oeuvre un algorithme commun comprennent des moyens pour mettre en oeuvre un premier algorithme ALG2 commun pour définir pour chaque période des valeurs initiales $K_{i-1}$ et des moyens pour mettre en oeuvre un deuxième algorithme commun ALG1 pour élaborer une valeur de deuxième fréquence respectivement $f_2^i$ et $f_2^2$ à chaque période dépendant de ladite valeur initiale $K_i$ et de la valeur de deuxième fréquence précédente respectivement

$$f_2^{1-1} \text{ et } f_2'^{1-1}.$$

3. Système selon la revendication 2, caractérisé en ce que ledit poste comprend en outre des moyens pour élaborer, avant l'établissement d'une communication, une première valeur de deuxième fréquence $f_2^1$ , et en ce que lesdits moyens de contrôle comprennent en outre des moyens pour mémoriser ladite première valeur de deuxième fréquence $f_2^1$ .

4. Système selon l'une quelconque des revendications 1 à 3, caractérisé en ce que ladite première valeur commune $K_1$ est échangée entre ledit terminal et lesdits moyens de contrôle par mise en oeuvre d'un code à clé publique.

5. Système selon la revendications 2, caractérisé en ce que lesdits moyens d'élaboration des deuxièmes fréquences $f_2^n$ et $f_2'^n$
comportent, en plus des moyens de mise en oeuvre du deuxième algorithme ALG1, des moyens pour réaliser une approximation de la valeur exacte déterminée par ledit algorithme, et en ce que lesdits moyens de comparaison comparent la valeur approximée $f_2'^n$
élaborée par ledit dispositif de contrôle avec une approximation de la valeur de deuxime fréquence $f_2^n$ émise par ledit terminal, telle qu'elle est effectivement reçue par ledit dispositif de contrôle.

6. Système selon l'une quelconque des revendications 1 à 5, caractérisé en ce que ledit terminal est un poste téléphonique.

7. Système selon la revendication 6, caractérisé en ce que ledit poste téléphonique est branché sur ladite ligne de communication.

**Claims**

1. A system of authenticating a communication by analogue signals of a frequency belonging to a first band of given frequencies between an emitter/receiver terminal and a communication line, characterized in that it comprises in addition a checking device mounted on the said line and in that:
   - the said terminal comprises means of preparing signals of authentication frequency in addition to the said communication signals with a periodicity T during the establishment of a communication, the said authentication signals having frequencies belonging to a second band of frequency, the said authentication signals comprising for each period a first fixed signal $f_1^i$ characteristic of the said station and a second variable signal $f_2^i$ ;
   - the said terminal and the said checking device comprise means of exchanging in the form of frequencies a first common value $K_1$ before the establishment of a communication, means of setting a common algorithm to work to prepare a second frequency value $f_2^i$ and $f'^i_2$ respectively at each period T depending at least upon the preceding second frequency value

$$f_2^{i-1} \text{ and } f'^{i-1}_2$$

respectively;
   - the said terminal comprises in addition means of emitting the said frequencies $f_1^i$ and $f_2^i$ at each period; and
   - the said checking means comprise in addition means of comparing each first frequency $f_1^i$ with predetermined values of first frequency, and of comparing each second frequency $f_2^i$ received at the corresponding prepared second frequency $f'^i_2$ with a predetermined band of approximation corresponding with the transmission of the line and means of prohibiting the said communication as a function of the results of the said comparisons.

2. A system as in Claim 1, characterized in that the means of setting a common algorithm to work comprise means of setting a first common algorithm ALG2 to work to define for each period initial values $K_{i-1}$ and means of setting a second common algorithm ALG1 to work to prepare a value of second frequency $f_2^i$ and $f'^2_2$ respectively at each period depending upon the said initial value $K_i$ and upon the preceding value of second frequency

$$f_2^{1-1} \text{ and } f'^{1-1}_2 .$$

3. A system as in Claim 2, characterized in that the said station comprises in addition means of preparing before the establishment of a communication a first value of second frequency $f_2^1$ , and in that the said checking means comprise in addition means of memorizing the said first value of second frequency $f_2^1$ .

4. A system as in any one of the Claims 1 to 3, characterized in that the said first common value $K_1$ is exchanged between the said terminal and the said checking means by making use of a public key code.

5. A system as in Claim 1, characterized in that the said means of preparing the second frequencies $f_2^n$ and $f''^n_2$ include in addition to the means of setting the second algorithm ALG1 to work, means of arriving at an approximation to the exact value determined by the said algorithm, and in that the said means of comparison compare the approximate value $f''^n_2$ prepared by the said checking device with an approximation to the value of second frequency $f_2^n$ emitted by the said terminal, as effectively received by the said checking device.

6. A system as in any one of the Claims 1 to 5, characterized in that the said terminal is a telephone station.

7. A system as in Claim 6, characterized in that the said telephone station is connected to the said

EP 0 292 342 B1

communication line.

**Patentansprüche**

**1.** System zur Kommunikationsauthentisierung mittels analoger Signale von Frequenzen innerhalb eines ersten Frequenzbandes, die zwischen einem sendenden/empfangenden Endgerät und einer Kommunikationsleitung ausgetauscht werden,
dadurch **gekennzeichnet,** daß
es unter anderem ein in der Leitung angebrachtes Kontrollgerät aufweist, sowie dadurch, daß:
das Endgerät eine Einrichtung aufweist, die zusätzlich zu den Kommunikationssignalen periodisch mit einer Dauer T während des Aufbaus einer Kommunikation Signale einer Authentisierungsfrequenz erzeugt, deren Frequenzen in einem zweiten Frequenzband liegen und die für jede Periode ein festes, für das Endgerät charakteristisches Signal $f_1^i$ und ein variables zweites Signal $f_2^i$ aufweisen,
das Endgerät und das Kontrollgerät eine Einrichtung aufweisen, um vor dem Aufbau einer Kommunikation einen ersten gemeinsamen Wert $K_1$ in Form einer Frequenz auszutauschen, eine Einrichtung zum Umsetzen eines gemeinsamen Algorithmus zum Erzeugen eines Werts der zweiten Frequenz $f_2^i$ bzw. $f'^i_2$ während jeder Periode T, wobei der Wert zumindest vom Wert der jeweils vorhergegangenen Werte der zweiten Frequenz

$$f_2^{i-1}$$

und

$$f'^{i-1}_2$$

abhängt, das Endgerät unter anderem eine Einrichtung zum Aussenden der Frequenzen $f_1^i$ und $f_2^i$ in jeder Periode aufweist, und
das Kontrollgerät unter anderem eine Einrichtung zum Vergleichen jeder ersten Frequenz $f_1^i$ mit vorbestimmten Werten der ersten Frequenz, sowie zum Vergleichen jeder empfangenen zweiten Frequenz $f_2^i$ mit der entsprechenden erzeugten Frequenz $f'^i_2$ innerhalb eines Näherungsbereichs, der entsprechend der Übertragungseigenschaft der Leitung vorbestimmt ist, sowie eine Einrichtung zum Verhindern der Kommunikation in Abhängigkeit vom Ergebnis der Vergleiche aufweist.

**2.** System nach Anspruch 1,
dadurch gekennzeichnet, daß
die Einrichtung zum Umsetzen des gemeinsamen Algorithmus eine Einrichtung zum Umsetzen eines ersten gemeinsamen Algorithmus ALG2 zum Definieren der anfänglichen Werte $K_{i-1}$ für jede Periode sowie eine Einrichtung zum Umsetzen eines zweiten gemeinsamen Algorithmus ALGI zum Erzeugen des Wertes der jeweiligen zweiten Frequenz $f_2^1$ bzw. $f'^1_2$ in Abhängigkeit von dem anfänglichen Wert $K_i$ und dem Wert der jeweiligen vorherigen Frequenzen

$$f_2^{i-1}$$

und

$$f'^{i-1}_2$$

in jeder Periode aufweist.

**3.** System nach Anspruch 2,
dadurch gekennzeichnet, daß
das Endgerät unter anderem eine Einrichtung zum Erzeugen eines ersten Werts der zweiten Frequenz $f_2^1$ vor dem Aufbau einer Kommunikation aufweist, sowie dadurch, daß die Kontrolleinrichtung eine Einrichtung zum Speichern des ersten Werts der zweiten Frequenz $f_2^1$ aufweist.

9

**4.** System nach einem der Ansprüche 1 bis 3,
dadurch gekennzeichnet, daß
der erste gemeinsame Wert $K_1$ zwischen dem Endgerät und der Kontrolleinrichtung durch Umsetzen eines Kodes für öffentliche Tasten ausgetauscht wird.

**5.** System nach Anspruch 2,
dadurch gekennzeichnet, daß
die Einrichtung zur Erzeugung der zweiten Frequenzen $f_2^n$ und $f''_2^n$ außerdem eine Einrichtung zur Umsetzung des zweiten Algorithmus ALGI aufweist, eine Einrichtung zur Durchführung einer Näherung des durch den Algorithmus bestimmten exakten Werts, sowie dadurch, daß die Vergleichseinrichtung den Näherungswert $f''_2^n$, der durch das Steuerungsgerät erzeugt wurde, mit der Näherung des Werts der zweiten Frequenz $f_2^n$, die durch das Endgerät ausgesendet wurde, so daß sie durch das Kontrollgerät empfangen werden kann, vergleicht.

**6.** System nach einem der Ansprüche 1 bis 5,
dadurch gekennzeichnet, daß
das Endgerät ein Telefongerät ist.

**7.** System nach Anspruch 6,
dadurch gekennzeichnet, daß
das Telefongerät von der Kommunikationsleitung abzweigt.

# FIG. 1

# FIG. 2

# FIG. 3

# FIG. 4